(19) Europäisches Patentamt
European Patent Office
Office européen des brevets

(11) Publication number: **0 165 004**
**A2**

(12) # EUROPEAN PATENT APPLICATION

(21) Application number: 85303953.5

(22) Date of filing: 04.06.85

(51) Int. Cl.[4]: A 01 C 3/00
A 01 C 23/02

(30) Priority: 04.06.84 GB 8414209

(43) Date of publication of application:
18.12.85 Bulletin 85/51

(84) Designated Contracting States:
BE DE FR GB IT NL SE

(71) Applicant: ALLIED COLLOIDS LIMITED
P.O. Box 38 Low Moor
Bradford West Yorkshire, BD12 0JZ(GB)

(72) Inventor: Field, John Rodney
2 Leyburn Avenue Hipperholme
Halifax(GB)

(72) Inventor: Wade, David William
6 Penn Grove Hightown
Liversedge West Yorkshire(GB)

(74) Representative: Lawrence, Peter Robin
Broughton et al,
GILL JENNINGS & EVERY 53-64 Chancery Lane
London WC2A 1HN(GB)

(54) **Improving the properties of land.**

(57) Sludge containing plant nutrients is added direct to land and the sludge is treated with a flocculant before being injected below the surface of the land. The sludges are for instance raw sewage sludges and the flocculant is generally a cationic acrylic polymer, for example formed of monomers of dialkylaminoalkyl (meth) acrylamides having a molecular weight in the range 500,000 to 30 million. The flocculated sludge can be added in large quantities then unflocculated sludge without spillage onto the surface.

EP 0 165 004 A2

Croydon Printing Company Ltd

0165004

ALLIED COLLOIDS 60/2278/02

IMPROVING THE PROPERTIES OF LAND

Organic waste sludges, for example raw sewage sludges and industrial organic sludges, are often discharged into tidal waters. These methods of disposal are environmentally hazardous and in many countries there is a move to replace such methods of disposal by direct disposal to land, by spreading the waste directly onto agricultural or waste land. It is often desirable to dispose of as much sludge as possible over a given area of land.

It is known to dispose of organic waste on agricultural land in order to increase the nutrient properties of the soil by utilising plant nutrients contained in the waste. Dry waste may be ploughed straight into the soil, but this method suffers the disadvantage that it is very expensive to dry the waste. It is known to dispose of raw, digested and dewatered organic sludges by spraying or spreading directly onto the land, but this method leaves sludge on the surface of the soil, where it may be offensive and even dangerous. In addition, ammoniacal nitrogen which is a nutrient for plants may be lost by volatilisation.

More recently, new methods of introducing sludge to land have been developed, which involve injection of the sludge below the surface of the soil. Generally this is achieved by cutting a furrow or a slit in the soil or the turf, introducing sludge into the furrow and then replacing the soil or turf on top of the sludge. One disadvantage of this method is that only a limited amount of sludge may be introduced into the furrow, above which limit the replaced soil or turf tends to displace sludge onto the surface of the soil where it may remain wet for a considerable length of time. This problem is particularly acute in heavy, clay or other soils having a high water content and in the disposal of sludges having low solids content which need to be introduced in greater volumes in order for there to be any advantageous increase in nutrient concentration in the land. One way of overcoming the problem of spillage is to dig deeper furrows but, of course, it becomes more expensive to dig deeper furrows and the plant nutrients in the sludge become unavailable to the roots of the crops growing in the soil.

The present invention avoids or minimises these difficulties and increases the efficiency of addition of nutrients to land in the form of sludge by allowing greater volumes of sludge to be introduced into furrows without substantial displacement of sludge onto the surface on the replacement of the soil or turf and increasing the rate at which any displaced sludge dries.

The invention provides a method for introducing sludge containing organic plant nutrients to land by flocculating the sludge by addition of a flocculant and injecting the sludge below the surface of the land.

Generally the sludge is introduced into the soil by conventional means, for instance it may be introduced into a furrow or slit made by a plough or cutter via pipes through which raw sludge is fed from a supply tank. Generally displaced material is immediately replaced. Thus the furrrows or slits may then be closed by the plough or by rollers. On arable land a conventional ploughshare having a feed pipe for the sludge disposed between the leading end and the trailing end, so that the sludge is fed into a furrow immediately after it is formed by the front edge of the ploughshare and the trailing end of the ploughshare allows the soil to fall back on to the sludge. On grassland it has been found convenient to use a series of parallel conventional substantially vertical cutters to form slits, feeding the sludge into slits via pipes and then if necessary rolling the turf back into position using a conventional roller. These methods are also useful for other types of land.

The method of the invention is of use where sludge is to be disposed to land having a low capacity for the sludge, for example clay type soils in which conventional methods have resulted in a large amount of spillage onto the surface on replacement of the soil on top of the sludge. However, the method of the invention is also useful in sandy-type soils where it may improve the physical properties of the soil giving it a better consistency and improving the retention of nutrients. The method of the invention is also of use in the reclamation of spoil heaps for example slag heaps from steel works, since the sludge adds plant nutrients to the material and also improves its physical properties allowing it to support plant growth.

The supply tank for the sludge may be carried by a separate vehicle, but is preferably drawn by the vehicle to which the plough or cutter is attached. Alternatively the slurry may be continously fed to the plough or cutter from a stationary supply tank though a pipeline.

Conveniently, the sludge is flocculated by mixing the flocculant with the raw sludge after the sludge leaves the supply tank but before it reaches the means for introduction into the soil. In this case the flocculant is carried in a separate supply tank on the vehicle drawing the plough or is fed to that vehicle from a supply tank on another vehicle or from a stationary tank connected to the injection means via a pipe line.

Alternatively or additionally , the supply sludge may be flocculated or conditioned before being added to the supply tank or in the tank itself and by this means the amount of flocculant that needs to be supplied at the point of injection is reduced.

Mixing of flocculating agent into the sludge may be achieved using the device described in British patent specification no. 1,346,596.

Methods according to the invention are useful for disposal of all types of organic sludge, for example raw sewage sludge and biologically treated industrial waste. The method of the invention is particularly useful for the disposal of sludges having a low solids content and when it is desired to dispose of a large volume over a given area of land in order for sufficient nutrient to be introduced and when there would, prior to the invention, be particularly severe problems of spillage onto the surface of the soil. However, it has been found that the invention is useful even for thickened sewage sludge, that is sewage sludge thickened to a higher solid content than that at which it is produced.

The type of flocculant that is selected for use in the method of the invention depends on the nature of the sludge. Agents which may be used in methods according to the invention are, for example, ionic organic polyelectrolytes or multivalent metal salts. Ionic organic polyelectrolytes useful as flocculants in methods according to the invention are incompletely or completely water soluble polymers and generally have molecular weights of at least 100,000, preferably in the range 500,000 to 30,000,000.

Any flocculant known in the art to be suitable flocculating the sludge may be used in the process of the invention. For most sludges a cationic polyelectrolyte is used as the flocculant. Preferred materials are cationic polyacrylamides and polyacrylates, for example, polymers or copolymers containing units of dialkylaminoalkyl(meth)acrylamide or dialkylaminoalkyl(meth)acrylate. Other polymers useful in the invention may comprise units of Mannich reaction products of acrylamide or their quaternary derivatives, diallyldimethyl ammonium chloride or methacrylamido-propyltrimethyl ammonium chloride, optionally copolymerised with acrylamide.

For sludges containing lime or metal salts anionic polyelectrolytes, such as polymers of sodium acrylate or methacrylate, may be used to flocculate the sludge.

The polymeric flocculant is generally added to the sludge in the form of a dilute aqueous solution which may be formed either by dissolving solid flocculant in water or by adding a fluid dispersion of the flocculant to water. Solid polymer may be formed by aqueous gel polymerisation, solution polymerisation or by reverse phase bead polymerisation of a dispersion of aqueous solution of monomer in a continuous phase of water-immiscible liquid, followed by drying and separation of the resultant polymer particles by conventional means. A fluid dispersion may be made by a reverse phase polymerisation process and may be added direct to water to provide the aqueous solution of flocculant or it may first be dried by, for instance, azeotropic distillation to remove the water and leave a dispersion of dry polymer particles in a water-immiscible liquid.

Organic flocculants are added in an amount of from 0.1 to 1.0% by weight of sludge dry solids, preferably 0.1 to 0.5%.

Inorganic flocculants may be used alone or in conjunction with organic flocculants. For example salts containing aluminium, iron or calcium ions may be used for instance in an amount of from 0.5% to 50% by weight of sludge dry solids, preferably 1 to 20%.

Sludge which contains useful plant nutrients for crops or pasture land is generally injected to a depth of 10 to 25 cm below the surface. Sludge containing hazardous components may be introduced at a depth of at least 25 cm and up to 40 cm below the surface.

Flocculating sludge according to the method of the invention increases the capacity of the soil and thus the efficiency of the disposal process. The invention is useful for disposal into clay-type soils in which there is usually a severe problem of spillage on to the surface or the soil. Not only does the process of the invention increase the amount of sludge that can be added to the soil without spillage occuring, but also increases the rate at which any sludge that does spill onto the surface dries thereby reducing the environmental hazard. The process of the invention is also of use in sandy soils whose drainage properties and retention of nutrients it may improve.

Flocculated sludge used in the invention is at least as beneficial to the soil as untreated sludge, and may often be better. The reason for this is thought to be that, whereas untreated sludge may bind the soil together, flocculated sludge usually does not, or does so to a lesser degree. The invention may improve the drainage properties of treated soil by reason of the sludge flocs and /or by virtue of the flocculation effect of the flocculant on the soil itself if present in sufficient amounts.

The method of the invention is useful for the disposal of high solids sludges but is most useful for disposing sludges having a low solids content, for example less than 5% or less than 3% dry weight solids.

The following Examples illustrate the invention:

EXAMPLE 1

A tray of coarsely sieved garden soil was prepared as follows:-

The overall soil depth was 11 cm, the soil was levelled but not compressed. A number of holes, each 6 $cm^2$ in area and 5 cm in depth, were made at 10 cm intervals using a piece of hollow tube. The soil thus removed was placed into a paper cup (approximate weight 26 g).

Digested primary activated sludge with a dry solids content of about 4-5% by weight was obtained from a sewage works.

Sludge was conditioned (by beaker pouring) with 100 $g/m^3$ of a copolymer formed from 30% by weight of methylchloride quaternised dimethylaminoethylacrylate and 70% by weight of acrylamide (intrinsic viscosity measured in 3M NaCl at 25°C = 10 dl/g).

A volume of untreated or treated sludge was poured into the hole via a funnel (the tip of the spout was 6 cm above the soil surface), the soil from the hole was added immediately afterwards.

When a volume of 25 ml was used there was no displacement of sludge on to the soil surface on the replacement of the soil, using samples of either treated or untreated sludge.

When a volume of 50 ml was used, in the case of untreated sludge, there was displacement of sludge onto the soil surface, but in the case of treated sludge, there was no such displacement.

Example 2

A hole 0.2 x 0.2 $m^2$ was dug in a field of which the soil had a field capacity moisture content of 58.3%. The soil was placed in a hopper above the hole. A volume of sludge that was flocculated or unflocculated having a dry solid content of 1.68% was poured into the hole and, after a set period of time the soil was replaced from the hopper onto the sludge. The surface area of sludge displaced onto the surface of the soil was measured and the appearance of the spillage after 15 minutes was noted. The flocculant used in run 1 is poly-(dimethylaminomethylacrylamide) in the form of the free base and was added to the sludge in the form of a 1% solution at a rate of 6 kg dry polymer per tonne of dry solids.

The following table shows the results of the experiment.

TABLE

| Run | Volume of sludge.l. | Flocculated | Area of spillage $m^2$ | Condition of spillage after 15 mins |
|---|---|---|---|---|
| 1 | 5 | yes | 0.054 | Dry |
| 2 | 5 | no | 0.089 | Wet |

The results show that the addition of flocculant to sludge reduces the amount of sludge that is spilled on to the surface of the soil and increases the rate at which it dries.

Example 3

Raw digested sewage sludge having a dry solid content 1.7% by weight was treated with a flocculant comprising a copolymer of dimethylaminoethylacrylate quaternised with methylchloride and acrylamide (62:38 by weight) at a rate of 1.5 kg dry weight active polymer per tonne of dry solids. The flocculated sludge was fed by a continuous line from the storage tank to pipes mounted on an injection unit traversing the field. To the preflocculated sludge a further dose of a flocculant was added as a 5% solution of poly (dimethylaminomethylacrylamide) quaternised with dimethyl sulphate at a rate of 4.5 kg active polymer per tonne of dry solids by introduction direct into the injection unit.

Observation of flocculated and unflocculated sludge injected into the soil by this means showed that the flocculated sludge spilled onto the surface only to a small degree whereas the unflocculated sludge spilled onto the surface in substantial amounts. After 15 minutes the flocculated sludge was seen to be forming a dry cake whereas the unflocculated sludge was still wet after the same length of time.

CLAIMS

1. A method for introducing sludge containing plant nutrients direct to land by injection below the surface of the land, characterised in that the sludge is flocculated by addition of a flocculant before being injected.

2. A method according to claim 1 in which the land is agricultural land.

3. A method according to either claim 1 or claim 2 in which the sludge has a solids contents of less than 5%, preferably less than 3% by weight.

4. A method according to any preceding claim in which the sludge is a raw sewage sludge.

5. A method according to any preceding claim in which the sludge is fed into a furrow or slit and material displaced from the furrow or slit is immediately replaced onto the sludge.

6. A method according to any preceding claim in which the sludge is injected at a depth in the range 10 to 25cm below the surface of the land.

7. A method according to any preceding claim in which the flocculant comprises a water-soluble polymer having a molecular weight of at least 100,000, preferably in the range 500,000 to 30 million.

8. A method according to claim 7 in which the polymer is formed from ethylenically unsaturated monomers, preferably acrylic monomers.

9. A method according to claim 8 in which the monomers comprise cationic monomers, preferably dialkylaminoalkyl -(meth) acrylamide or -(meth) acrylates or their acids or quaternary derivatives.

10. A method according to any preceding claim in which the sludge is treated with the flocculant immediately before injection.